# EUROPEAN PATENT APPLICATION

(11) **EP 4 550 870 A1**
(43) Date of publication of application: **07.05.2025**
(21) Application number: 23862433.2
(22) Date of filing: 06.09.2023
(51) Int. Cl.: H04W 24/04

(54) **COMMUNICATION METHODS AND DEVICE, AND STORAGE MEDIUM**

(30) Priority: 08.09.2022 CN 202211100339
(71) Applicant: ZTE Corporation, Shenzhen, Guangdong 518057 (CN)
(72) Inventor: GAO, Lei, Shenzhen, Guangdong 518057 (CN); FAN, Wanpeng, Shenzhen, Guangdong 518057 (CN); DING, Xuexin, Shenzhen, Guangdong 518057 (CN); ZHOU, Gongcai, Shenzhen, Guangdong 518057 (CN); ZHU, Jinguo, Shenzhen, Guangdong 518057 (CN); LI, Zhijun, Shenzhen, Guangdong 518057 (CN)
(74) Representative: Aipex B.V.
(86) International application number: PCT/CN2023/117241
(87) International publication number: WO 2024/051739

(57) **Abstract**

Provided are a communication method and device and a storage medium. A communication method applied to a first network element includes: receiving a globally unique access and mobility management function, AMF, identifier of a first AMF fed back by a second network element; sending the globally unique AMF identifier of the first AMF to a third network element; and in the case where the first AMF is abnormal, receiving a service address of a second AMF fed back by the third network element, where the second AMF is a backup AMF of the first AMF.

## Description

### TECHNICAL FIELD

The present application relates to the field of communications, for example, a communication method and device and a storage medium.

### BACKGROUND

In the case where a user equipment (UE) accesses an operator network, a 5th-Generation Core Mobile-Termination Location Request (5GC MT-LR) location may be performed on the UE. During the location of the UE, if an access and mobility management function (AMF) is abnormal, a location procedure is prone to fail.

### SUMMARY

An embodiment of the present application provides a communication method and device and a storage medium to effectively avoid the failure of a location procedure in the case of an abnormal AMF.

An embodiment of the present application provides a communication method. The method is applied to a first network element and includes the following.

A globally unique access and mobility management function (AMF) identifier of a first AMF fed back by a second network element is received; the globally unique AMF identifier of the first AMF is sent to a third network element; and in response to the first AMF being abnormal, a service address of a second AMF fed back by the third network element is received, where the second AMF is a backup AMF of the first AMF.

An embodiment of the present application provides a communication method. The method is applied to a second network element and includes the following.

A globally unique access and mobility management function (AMF) identifier of a first AMF is sent to a first network element so that the first network element is enabled to send the globally unique AMF identifier of the first AMF to a third network element; and in response to the first AMF being abnormal, a service address of a second AMF fed back by the third network element is received.

An embodiment of the present application provides a communication method. The method is applied to a third network element and includes the following.

A globally unique access and mobility management function (AMF) identifier of a first AMF sent by a first network element is received; a query is performed according to the globally unique AMF identifier of the first AMF so that a service address of the first AMF is obtained; in response to detecting that the first AMF is abnormal, a second AMF corresponding to the first AMF is queried according to the globally unique AMF identifier of the first AMF; and a service address of the second AMF is fed back to the first network element.

An embodiment of the present application provides a communication device. The communication device includes a memory and at least one processor. The memory is configured to store at least one program. When the at least one program is executed by the at least one processor, the at least one processor is caused to implement the communication method according to any one of the preceding embodiments.

An embodiment of the present application provides a storage medium storing a computer program. The communication method according to any one of the preceding embodiments is implemented when the computer program is executed by a processor.

### BRIEF DESCRIPTION OF DRAWINGS

FIG. 1 is a schematic diagram of 5G location networking after geographic disaster recovery of an AMF according to an embodiment of the present application;
FIG. 2 is a flowchart of a communication method according to an embodiment of the present application;
FIG. 3 is a flowchart of another communication method according to an embodiment of the present application;
FIG. 4 is a flowchart of another communication method according to an embodiment of the present application;
FIG. 5 is a flowchart of 5GC MT-LR location according to the related art;
FIG. 6 is a flowchart of 5GC MT-LR location according to an embodiment of the present application;
FIG. 7 is a block diagram of a communication apparatus according to an embodiment of the present application;
FIG. 8 is a block diagram of another communication apparatus according to an embodiment of the present application;
FIG. 9 is a block diagram of another communication apparatus according to an embodiment of the present application; and
FIG. 10 is a structural diagram of a communication device according to an embodiment of the present application.

### DETAILED DESCRIPTION

Embodiments of the present application are described hereinafter in conjunction with drawings. The present application is described hereinafter in conjunction with embodiments and drawings. The examples illustrated are intended to explain the present application.

In an information society, accurate description and determination of locations by humans have become fundamental requirements for the normal operation of organizational structures in the society. Generally speaking, most of the information which humans obtain in life is closely related to spatial information. Location information has become an important part of the entire social information flow.

A base station location technology allows operators to output location capabilities through an application program interface (API) while providing users with voice, message, and data connections during the construction of wireless networks. The API may be invoked by a rich variety of location applications, and users do not need to build a location capability platform separately. The API is a location technology that can be replicated and popularized on a large scale, may be applied to many industries and customers with very low marginal cost, and communication operators focus on developing.

The 3rd Generation Partnership Project (3GPP) defines 5G location. For a 5GC MT-LR procedure, the AMF receives a request for a certain location service related to a specific target UE from a gateway mobile location centre (GMLC) and then sends the location service request to a location management function (LMF). The LMF processes the location service request. The location service request may include transmitting assistance data to the target UE for UE-based location or UE-assisted location and/or may include the location of the target UE. The LMF then returns a result of the location service to the AMF (such as a location estimate for the UE).

With the continuous construction of the 5G network's coverage, a corresponding solution has been proposed for geographic disaster recovery of the AMF. As defined by the 3GPP, when the AMF registers with an NRF, it may be indicated, through backupInfoAmfFailure, which AMF the AMF is a backup for. For example, in the case where a backup AMF registers with the NRF, the backup AMF is registered as a backup of an active AMF: backupInfoAmfFailure: [{ "plmnId": { "mcc": "234", "mnc": "15" }, "amfld": "a GUAMI of the active AMF"}.

For the 5GC MT-LR location procedure, considering the scenario where the UE accesses an operator network through 3GPP or Non-3GPP, the GMLC needs to use a location information retrieval interface to acquire information on a current serving AMF of the UE from a unified data management (UDM). However, the GMLC can only acquire an NF instance ID of the AMF through the location information retrieval interface. When the AMF is queried from a network repository function (NRF) through the instance ID of the AMF, the NRF does not return the information on the backup AMF. The NRF only performs disaster recovery according to the GUAMI. Since the GMLC can only acquire the instance ID of the AMF through the location information retrieval interface, disaster recovery of the AMF cannot be supported.

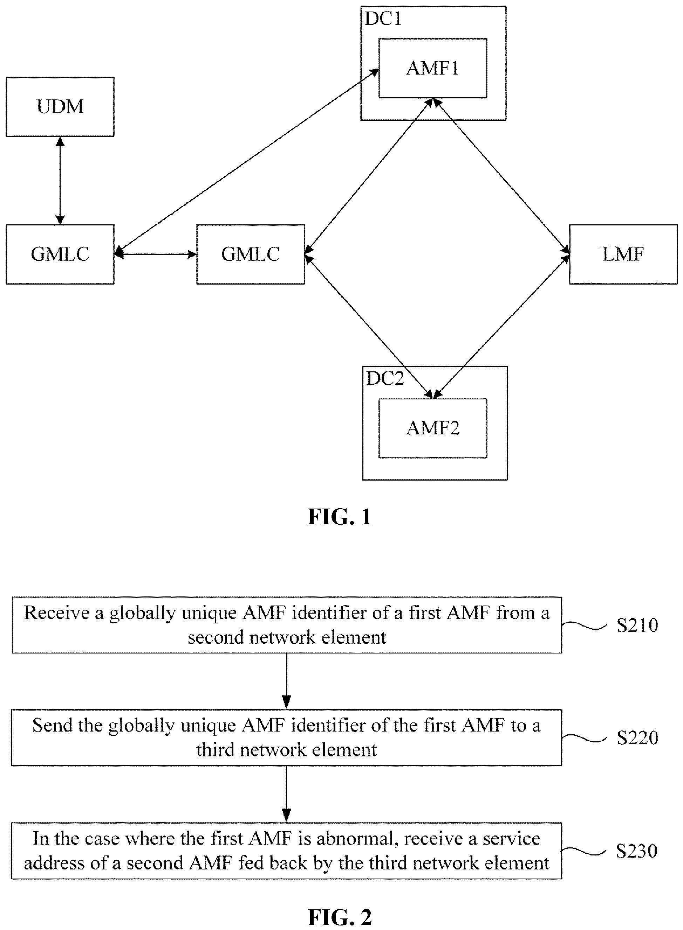

FIG. 1 is a schematic diagram of 5G location networking after the geographic disaster recovery of the AMF according to an embodiment of the present application. As shown in FIG. 1, after the geographic disaster recovery of the AMF, network elements involved in the 5G location are networked. AMF1 is the active AMF, and AMF2 is the backup AMF. In the case where AMF1 fails, AMF2 may be used to perform a 5G location process. In the embodiment of the present application, in the case of the disaster recovery of the AMF in a 5GC MT-LR location process, the 5GC MT-LR location process is described with reference to the networking diagram shown in FIG. 1.

In an embodiment, FIG. 2 is a flowchart of a communication method according to an embodiment of the present application. This embodiment is applied to the disaster recovery of the AMF in the 5GC MT-LR location process. This embodiment may be performed by a first network element. For example, the first network element may be the GMLC. As shown in FIG. 2, this embodiment includes S210 to S230.

In S210, a globally unique AMF identifier of a first AMF from a second network element is received.

The second network element refers to the UDM. In the embodiment, the first AMF refers to the current serving AMF, that is, the AMF that establishes communication connections with the first network element, a third network element, and the LMF in the 5G location process. In the embodiment, the second network element returns the globally unique AMF identifier of the current serving first AMF to the first network element. The globally unique AMF identifier refers to the GUAMI.

In S220, the globally unique AMF identifier of the first AMF is sent to the third network element.

The third network element refers to the NRF. In the embodiment, the first network element sends the GUAMI of the first AMF to the third network element so that the third network element queries a service address of the first AMF according to the GUAMI of the first AMF.

In S230, in the case where the first AMF is abnormal, a service address of a second AMF fed back by the third network element is received.

The second AMF is a backup AMF of the first AMF. In the embodiment, the first AMF is abnormal, which may be understood as a failure of the first AMF. For example, the first AMF is abnormal, which may refer to, but is not limited to, a communication failure of the first AMF and a data processing failure of the first AMF. In the embodiment, in the case where the first AMF is abnormal, the third network element queries the backup AMF, that is, the second AMF, of the first AMF according to the GUAMI of the first AMF and returns the service address of the second AMF to the first network element so that the second AMF performs the 5GC MT-LR location process. Thus, the failure of a location procedure in the case where the first AMF is abnormal is avoided.

In an embodiment, before receiving the globally unique AMF identifier of the first AMF fed back by the second network element, the method further includes sending the second network element a location information retrieval request message carrying a target user identity. The target user identity refers to an identity of the target UE that is located. One corresponding target user identity is configured for each target UE. In the embodiment, the first network element finds, according to the target user identity, the second network element to which the target UE corresponding to the target user identity belongs. Then, the first network element invokes a location information retrieval interface to the second network element to which the target UE belongs and sends the second network element the location information retrieval request message through the location information retrieval interface. After receiving the location information retrieval request message, the second network element returns the GUAMI of the first AMF that serves the target UE to the first network element.

In an embodiment, a bearer message of the globally unique AMF identifier of the first AMF includes a location information retrieval response message. In the embodiment, the second network element uses the location information retrieval response message to carry the GUAMI of the first AMF and feeds back the location information retrieval response message to the first network element.

In an embodiment, the location information retrieval response message further carries a network function instance identity. In the embodiment, the network function instance identity refers to the NF instance ID. In the embodiment, while returning the GUAMI of the first AMF to the first network element, the second network element also returns the NF instance ID of the first AMF to the first network element. Additionally, the NF instance ID is carried through the location information retrieval response message.

In an embodiment, after receiving the service address of the second AMF fed back by the third network element, the method further includes sending a location request message to the second AMF to enable the second AMF to initiate a network triggered service request procedure and establish a signaling connection with a user equipment corresponding to the target user identity. In the embodiment, after acquiring the service address of the second AMF, the first network element establishes a communication connection with the LMF through the second AMF. In the embodiment, the first network element sends the location request message to the second AMF to request a current location of the target UE. If the target UE is in an idle state, the second AMF initiates the network triggered service request procedure to establish the signaling connection with the target UE.

In an embodiment, the communication method applied to the first network element further includes receiving a location response message fed back by the second AMF to obtain the current location of the user equipment corresponding to the target user identity. In the embodiment, after establishing the signaling connection with the target UE, the second AMF invokes a location determination request to the LMF to request the current location of the target UE so that the LMF performs a location operation on the target UE. After the location of the target UE is determined, the LMF returns a location determination response to the second AMF to return the current location of the target UE. In addition, the location response message is returned to the first network element through the second AMF so that the first network element obtains the current location (including a new radio cell global identifier (NCGI)) of the target UE.

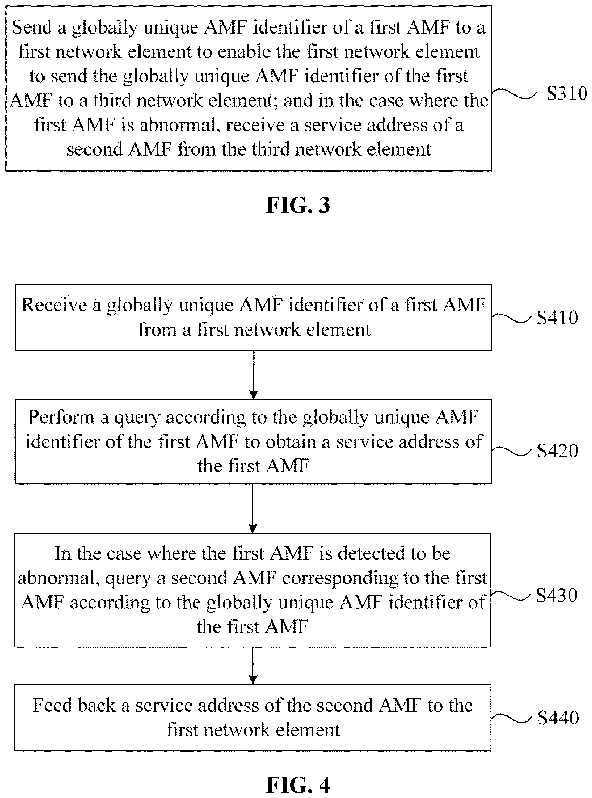

In an embodiment, FIG. 3 is a flowchart of another communication method according to an embodiment of the present application. This embodiment is applied to the disaster recovery of the AMF in the 5GC MT-LR location process. This embodiment may be performed by a second network element. For example, the second network element may be the UDM. As shown in FIG. 3, this embodiment includes S310.

In S310, a globally unique AMF identifier of a first AMF is sent to a first network element so that the first network element is enabled to send the globally unique AMF identifier of the first AMF to a third network element; and in the case where the first AMF is abnormal, a service address of a second AMF fed back by the third network element is received.

In the embodiment, the second network element sends the first network element the GUAMI of the current serving first AMF of the target UE so that the first network element is enabled to query a service address of the first AMF from the third network element according to the GUAMI of the first AMF. In the case where the first AMF is abnormal, the third network element queries a backup AMF of the first AMF according to the GUAMI of the first AMF and sends the service address of the second AMF to the first network element.

In an embodiment, before sending the globally unique AMF identifier of the first AMF to the first network element, the method further includes receiving a location information retrieval request message carrying a target user identity sent by the first network element.

In an embodiment, a bearer message of the globally unique AMF identifier of the first AMF includes a location information retrieval response message.

In an embodiment, the location information retrieval response message further carries a network function instance identity.

For explanations of the first AMF, the second AMF, the GUAMI, the location information retrieval request message, the location information retrieval response message, and other parameters in the communication method applied to the second network element, see the description of the corresponding parameters in the preceding embodiment of the communication method applied to the first network element. The details are not repeated here.

In an embodiment, FIG. 4 is a flowchart of another communication method according to an embodiment of the present application. This embodiment is applied to the disaster recovery of the AMF in the 5GC MT-LR location process. This embodiment may be performed by a second network element. As shown in FIG. 3, this embodiment includes S410 to S440.

In S410, a globally unique AMF identifier of a first AMF sent by a first network element is received.

In S420, a query is performed according to the globally unique AMF identifier of the first AMF so that a service address of the first AMF is obtained.

In S430, in the case where the first AMF is detected to be abnormal, a second AMF corresponding to the first AMF is queried according to the globally unique AMF identifier of the first AMF.

In S440, a service address of the second AMF is fed back to the first network element.

In an embodiment, a bearer message of the globally unique AMF identifier of the first AMF includes a location information retrieval response message.

In an embodiment, the location information retrieval response message further carries a network function instance identity.

For explanations of the first AMF, the second AMF, the GUAMI, the location information retrieval request message, the location information retrieval response message, and other parameters in the communication method applied to a third network element, see the description of the corresponding parameters in the preceding embodiment of the communication method applied to the first network element. The details are not repeated here.

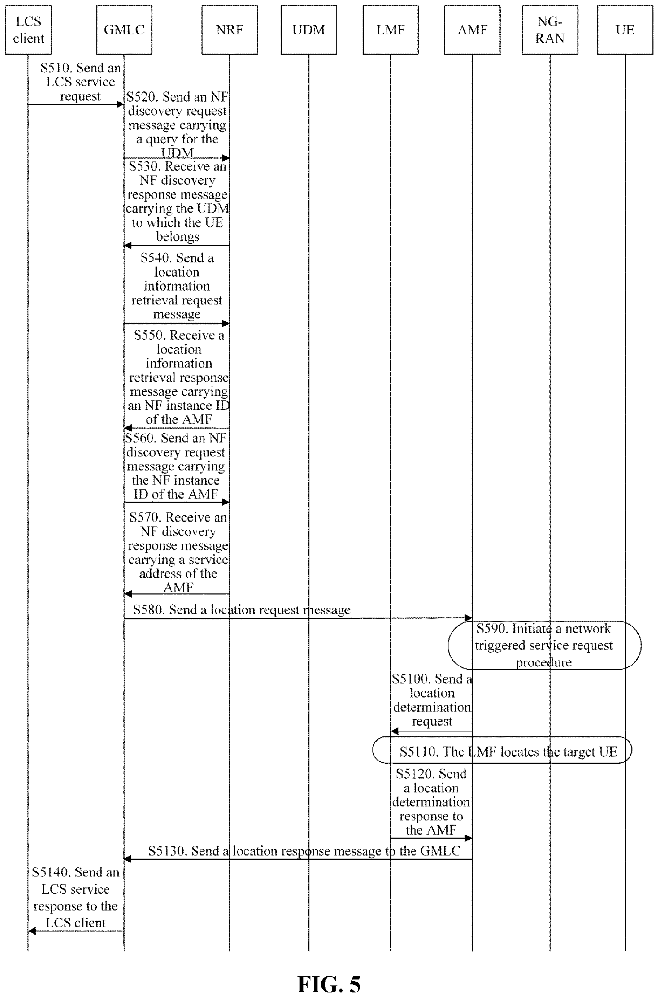

The 5GC MT-LR location process is described using an example in which the first network element is the GMLC, the second network element is the UDM, and the third network element is the NRF. FIG. 5 is a flowchart of 5GC MT-LR location according to the related art. As shown in FIG. 5, the 5GC MT-LR location process in the related art includes the following.

In S510, a location service (LCS) service request is sent.

In the embodiment, an LCS client sends the LCS service request to the GMLC to request the location of a to-be-measured UE from the GMLC.

In S520, an NF discovery request message carrying a query for the UDM is sent.

In the embodiment, the GMLC sends the NF discovery request message (Nnrf_NFDiscovery Request) to the NRF to query the UDM to which a target UE belongs.

In S530, an NF discovery response message carrying the UDM to which the UE belongs is received.

In the embodiment, the NRF returns the UDM to which the UE belongs to the GMLC through the NF discovery response message (Nnrf_NFDiscovery Response).

In S540, a location information retrieval request message is sent.

In the embodiment, the GMLC invokes a location information retrieval interface of a Nudm_UECM_Get service to the UDM to which the target UE belongs and sends the location information retrieval request message through the location information retrieval interface.

In S550, a location information retrieval response message carrying an NF instance ID of an AMF is received.

In the embodiment, the UDM returns the NF instance ID of the current serving AMF to the GMLC.

In S560, an NF discovery request message carrying the NF instance ID of the AMF is sent.

In the embodiment, the GMLC uses the NF instance ID of the AMF to query an address of the AMF from the NRF. In the embodiment, the GMLC sends the NRF the NF discovery request message carrying the NF instance ID so that the NRF uses the NF instance ID to query the service address of the AMF.

In S570, an NF discovery response message carrying the service address of the AMF is received.

In the embodiment, the NRF returns the service address of the AMF to the GMLC through the NF discovery response message.

In S580, a location request message is sent.

In the embodiment, the GMLC invokes a Namf_Location_RequestPosInfo Request service for the AMF to request a current location of the target UE.

In S590, a network triggered service request procedure is initiated.

In the embodiment, if the target UE is in a connection management idle (CM IDLE) state, the AMF initiates the network triggered service request procedure to establish a signaling connection with the UE.

In S5100, a location determination request is sent.

In the embodiment, the AMF sends an Nlmf_Location_DetermineLocation request to the LMF to request the current location of the target UE.

In S5110, the LMF locates the target UE.

In S5120, a location determination response is sent to the AMF.

In the embodiment, the LMF sends the location determination response to the AMF, allowing the LMF to feed back a location result to the AMF.

In S5130, a location response message is sent to the GMLC.

In the embodiment, the AMF returns a Namf_Location_ProvidePosInfo response to the GMLC to return the current location of the UE.

In S5140, an LCS service response is sent to an LCS client.

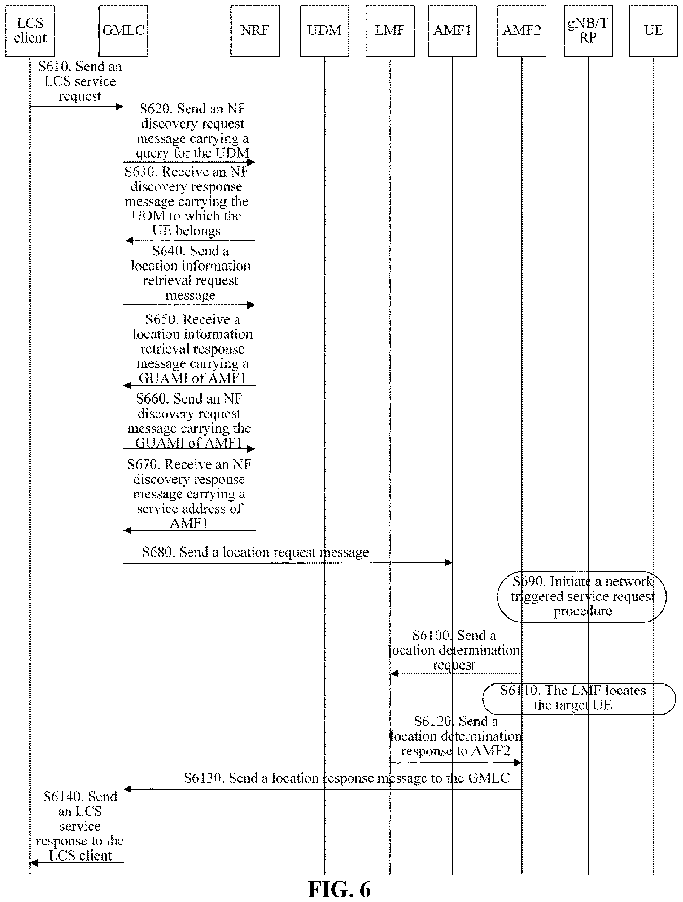

In an embodiment, a 5GC MT-LR location process is described using an example in which the first network element is the GMLC, the second network element is the UDM, the third network element is the NRF, the first AMF (that is, the active AMF) is AMF1, and the second AMF (that is, the backup AMF) is AMF2. FIG. 6 is a flowchart of 5GC MT-LR location according to an embodiment of the present application. In the case where a target UE currently uses AMF1 and AMF2 registers with the NRF, AMF2 is registered as a backup of AMF 1: AMF backupInfoAmfFailure": [{ "plmnId": { "mcc": "234", "mnc": "15" }, "amfld": "a GUAMI of the active AMF"}.

As shown in FIG. 6, the 5GC MT-LR location process in this embodiment includes S610 to S6140.

In S610, an LCS service request is sent.

In the embodiment, an LCS client sends the LCS service request to the GMLC to request the location of a to-be-measured UE from the GMLC.

In S620, an NF discovery request message carrying a query for the UDM is sent.

In the embodiment, the GMLC sends the NF discovery request message (Nnrf_NFDiscovery Request) to the NRF to query the UDM to which the target UE belongs.

In S630, an NF discovery response message carrying the UDM to which the UE belongs is received.

In the embodiment, the NRF returns the UDM to which the UE belongs to the GMLC through the NF discovery response message (Nnrf_NFDiscovery Response).

In S640, a location information retrieval request message is sent.

In the embodiment, the GMLC invokes a location information retrieval interface of a Nudm_UECM_Get service to the UDM to which the target UE belongs and sends the location information retrieval request message through the location information retrieval interface.

In S650, a location information retrieval response message carrying the GUAMI of AMF1 is received.

In the embodiment, the UDM returns the GUAMI of AMF1 to the GMLC, where the AMF1 is a current serving AMF.

In S660, an NF discovery request message carrying the GUAMI of AMF1 is sent.

In the embodiment, the GMLC uses the GUAMI of AMF1 to query an address of the AMF from the NRF. In the embodiment, the GMLC sends the NRF the NF discovery request message carrying the GUAMI so that the NRF uses the GUAMI to query the service address of AMF1.

In S670, an NF discovery response message carrying the service address of AMF1 is received.

In the embodiment, the NRF discovers that AMF 1 is abnormal. The NRF finds, according to the GUAMI of AMF1, that the backup AMF of AMF1 is AMF2 and returns a service address of AMF2 to the GMLC through the NF discovery response message.

In S680, a location request message is sent.

In the embodiment, the GMLC invokes a Namf_Location_RequestPosInfo Request service for AMF2 to request a current location of the target UE.

In S690, a network triggered service request procedure is initiated.

In the embodiment, if the target UE is in a CM IDLE state, AMF2 initiates the network triggered service request procedure to establish a signaling connection with the UE.

In S6100, a location determination request is sent.

In the embodiment, AMF2 sends an Nlmf_Location_DetermineLocation request to the LMF to request the current location of the target UE.

In S6110, the LMF locates the target UE.

In S6120, a location determination response is sent to AMF2.

In the embodiment, the LMF sends the location determination response to AMF2, allowing the LMF to feed back a location result to AMF2.

In S6130, a location response message is sent to the GMLC.

In the embodiment, AMF2 returns a Namf_Location_ProvidePosInfo response to the GMLC to return the current location of the UE.

In S6140, an LCS service response is sent to an LCS client.

In the case where the UE accesses a 5G network of an operator through 3GPP or Non-3GPP, the disaster recovery of the AMF can be supported when the 5GC MT-LR location procedure is performed on the UE. In addition, when AMF1 is abnormal, the MT-LR location can be supported by the backup AMF (that is, AMF2). Thus, the failure of the location procedure in the case where AMF1 is abnormal is avoided.

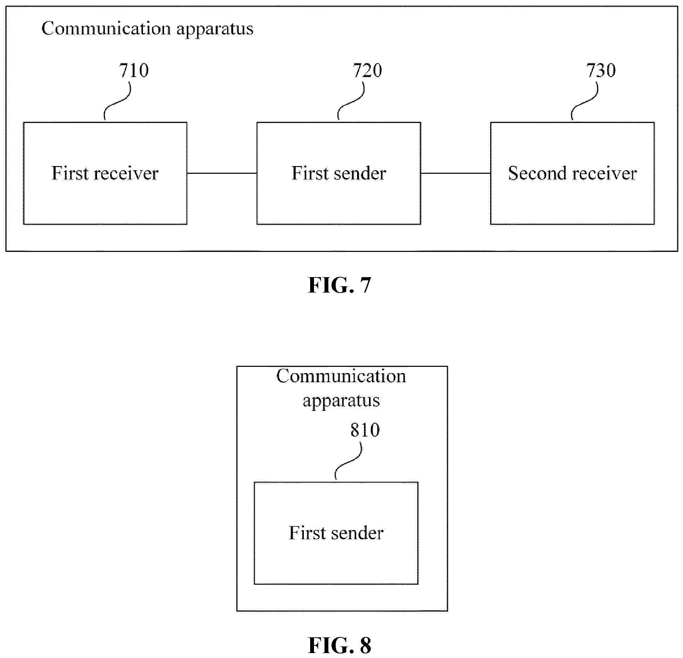

In an embodiment, FIG. 7 is a block diagram of a communication apparatus according to an embodiment of the present application. This embodiment is applied to a first network element. As shown in FIG. 7, the communication apparatus in this embodiment includes a first receiver 710, a first sender 720, and a second receiver 730.

The first receiver 710 is configured to receive a globally unique access and mobility management function (AMF) identifier of a first AMF fed back by a second network element.

The first sender 720 is configured to send the globally unique AMF identifier of the first AMF to a third network element.

The second receiver 730 is configured to, in the case where the first AMF is abnormal, receive a service address of a second AMF fed back by the third network element, where the second AMF is a backup AMF of the first AMF.

In an embodiment, before the globally unique AMF identifier of the first AMF fed back by the second network element is received, the communication apparatus applied to the first network element further includes a second sender.

The second sender is configured to send the second network element a location information retrieval request message carrying a target user identity.

In an embodiment, a bearer message of the globally unique AMF identifier of the first AMF includes a location information retrieval response message.

In an embodiment, the location information retrieval response message further carries a network function instance identity.

In an embodiment, after the service address of the second AMF fed back by the third network element is received, the communication apparatus applied to the first network element further includes a third sender.

The third sender is configured to send a location request message to the second AMF to enable the second AMF to initiate a network triggered service request procedure and establish a signaling connection with a user equipment corresponding to the target user identity.

In an embodiment, the communication apparatus applied to the first network element further includes a third receiver.

The third receiver is configured to receive a location response message fed back by the second AMF to obtain a current location of the user equipment corresponding to the target user identity.

The communication apparatus of this embodiment is configured to implement the communication method applied to the first network element according to the embodiment shown in FIG. 1. The implementation principles and technical effects of the communication apparatus of this embodiment are similar to those of the communication method applied to the first network element according to the embodiment shown in FIG. 1 and thus are not repeated here.

In an embodiment, FIG. 8 is a block diagram of another communication apparatus according to an embodiment of the present application. This embodiment is applied to a second network element. As shown in FIG. 8, the communication apparatus in this embodiment includes a first sender 810.

The first sender 810 is configured to: send a first network element a globally unique AMF identifier of a first AMF to enable the first network element to send the globally unique AMF identifier of the first AMF to a third network element; and in the case where the first AMF is abnormal, receive a service address of a second AMF fed back by the third network element.

In an embodiment, before the globally unique AMF identifier of the first AMF is sent to the first network element, the communication apparatus applied to the second network element further includes a receiver.

The receiver is configured to receive a location information retrieval request message carrying a target user identity sent by the first network element.

In an embodiment, a bearer message of the globally unique AMF identifier of the first AMF includes a location information retrieval response message.

In an embodiment, the location information retrieval response message further carries a network function instance identity.

The communication apparatus of this embodiment is configured to implement the communication method applied to the second network element according to the embodiment shown in FIG. 2. The implementation principles and technical effects of the communication apparatus of this embodiment are similar to those of the communication method applied to the second network element according to the embodiment shown in FIG. 2 and thus are not repeated here.

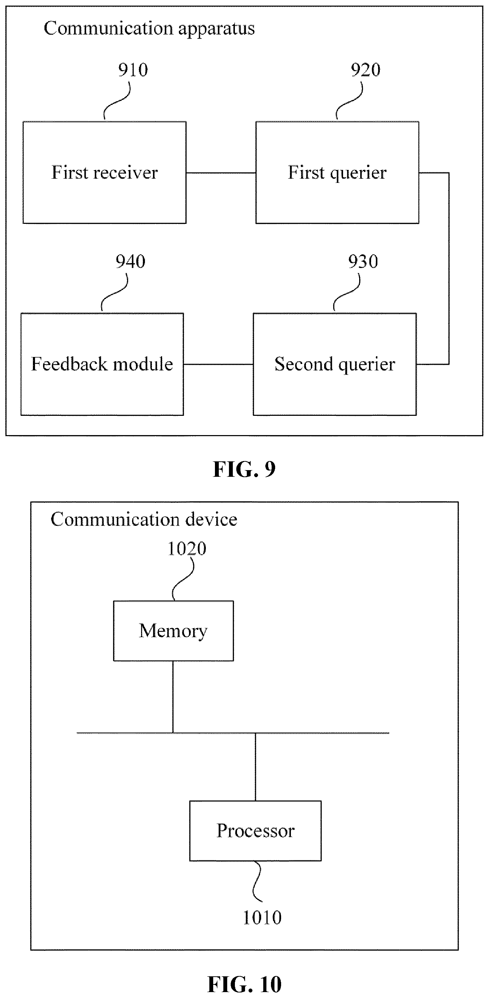

In an embodiment, FIG. 9 is a block diagram of another communication apparatus according to an embodiment of the present application. This embodiment is applied to a third network element. As shown in FIG. 9, the communication apparatus in this embodiment includes a first receiver 910, a first querier 920, a second querier 930, and a feedback module 940.

The first receiver 910 is configured to receive a globally unique AMF identifier of a first AMF sent by a first network element.

The first querier 920 is configured to perform a query according to the globally unique AMF identifier of the first AMF to obtain a service address of the first AMF.

The second querier 930 is configured to, in the case where it is detected that the first AMF is abnormal, query, according to the globally unique AMF identifier of the first AMF, a second AMF corresponding to the first AMF.

The feedback module 940 is configured to feed back a service address of the second AMF to the first network element.

In an embodiment, a bearer message of the globally unique AMF identifier of the first AMF includes a location information retrieval response message.

In an embodiment, the location information retrieval response message further carries a network function instance identity.

The communication apparatus of this embodiment is configured to implement the communication method applied to the third network element according to the embodiment shown in FIG. 3. The implementation principles and technical effects of the communication apparatus of this embodiment are similar to those of the communication method applied to the third network element according to the embodiment shown in FIG. 3 and thus are not repeated here.

In an embodiment, FIG. 10 is a structural diagram of a communication device according to an embodiment of the present application. As shown in FIG. 10, the device provided in the present application includes a processor 1010 and a memory 1020. One or more processors 1010 may be provided in the device. One processor 1010 is shown as an example in FIG. 10. One or more memories 1020 may be provided in the device. One memory 1020 is shown as an example in FIG. 10. The processor 1010 and memory 1020 of the device may be connected through a bus or in other manners. The connection through a bus is used as an example in FIG. 10. In an embodiment, the device may be the first network element.

As a computer-readable storage medium, the memory 1020 may be configured to store software programs and computer-executable programs and modules, such as program instructions/modules (for example, the first receiver 710, the first sender 720, the second receiver 730 in the communication apparatus) corresponding to the device in any embodiment of the present application. The memory 1020 may include a program storage region and a data storage region, where the program storage region may store an operating system and an application program required by at least one function, and the data storage region may store data created depending on the use of the device. Additionally, the memory 1020 may include a high-speed random-access memory and may also include a nonvolatile memory such as at least one magnetic disk memory, a flash memory, or another nonvolatile solid-state memory. In some examples, the memory 1020 may include memories remote from the processor 1010, and these remote memories may be connected to the device through a network. Examples of the preceding network include, but are not limited to, the Internet, an intranet, a local area network, a mobile communication network, and a combination thereof.

In the case where the communication device is the first network element, the device provided above may be configured to perform the communication method applied to the first network element that is provided by any preceding embodiment and has corresponding functions and effects.

In the case where the communication device is the second network element, the device provided above may be configured to perform the communication method applied to the second network element that is provided by any preceding embodiment and has corresponding functions and effects.

In the case where the communication device is the third network element, the device provided above may be configured to perform the communication method applied to the third network element that is provided by any preceding embodiment and has corresponding functions and effects.

An embodiment of the present application further provides a storage medium including a computer-executable instruction. When the computer-executable instruction is executed by a computer processor, the computer processor performs a communication method applied to a network element. The method includes: receiving a globally unique access and mobility management function (AMF) identifier of a first AMF fed back by a second network element; sending the globally unique AMF identifier of the first AMF to a third network element; and in the case where the first AMF is abnormal, receiving a service address of a second AMF fed back by the third network element, where the second AMF is a backup AMF of the first AMF.

An embodiment of the present application further provides a storage medium including a computer-executable instruction. When the computer-executable instruction is executed by a computer processor, the computer processor performs a communication method applied to the second network element. The method includes: sending a first network element a globally unique AMF identifier of a first AMF to enable the first network element to send the globally unique AMF identifier of the first AMF to a third network element; and in the case where the first AMF is abnormal, receiving a service address of a second AMF fed back by the third network element.

An embodiment of the present application further provides a storage medium including a computer-executable instruction. When the computer-executable instruction is executed by a computer processor, the computer processor performs a communication method applied to the third network element. The method includes: receiving a globally unique AMF identifier of a first AMF sent by a first network element; performing a query according to the globally unique AMF identifier of the first AMF to obtain a service address of the first AMF; in the case where it is detected that the first AMF is abnormal, querying, according to the globally unique AMF identifier of the first AMF, a second AMF corresponding to the first AMF; and feeding back a service address of the second AMF to the first network element.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, the method being applied to a first network element and comprising:
receiving a globally unique access and mobility management function, AMF, identifier of a first AMF from a second network element;
sending the globally unique AMF identifier of the first AMF to a third network element; and
in response to the first AMF being abnormal, receiving a service address of a second AMF from the third network element, wherein the second AMF is a backup AMF of the first AMF.

2. The method according to claim 1, before receiving the globally unique AMF identifier of the first AMF from the second network element, further comprising:
sending the second network element a location information retrieval request message carrying a target user identity.

3. The method according to claim 1, wherein a bearer message of the globally unique AMF identifier of the first AMF comprises a location information retrieval response message.

4. The method according to claim 3, wherein the location information retrieval response message further carries a network function instance identity.

5. The method according to claim 1, after receiving the service address of the second AMF from the third network element, further comprising:
sending a location request message to the second AMF to enable the second AMF to initiate a network triggered service request procedure and establish a signaling connection with a user equipment corresponding to the target user identity.

6. The method according to claim 5, further comprising:
receiving a location response message from the second AMF to obtain a current location of the user equipment corresponding to the target user identity.

7. A communication method, the method being applied to a second network element and comprising:
sending a first network element a globally unique access and mobility management function, AMF, identifier of a first AMF to enable the first network element to send the globally unique AMF identifier of the first AMF to a third network element; and
in response to the first AMF being abnormal, receiving a service address of a second AMF from the third network element.

8. The method according to claim 7, before sending the globally unique AMF identifier of the first AMF to the first network element, further comprising:
receiving a location information retrieval request message carrying a target user identity from the first network element.

9. The method according to claim 7 or 8, wherein a bearer message of the globally unique AMF identifier of the first AMF comprises a location information retrieval response message.

10. A communication method, the method being applied to a third network element and comprising:
receiving a globally unique access and mobility management function, AMF, identifier of a first AMF from a first network element;
performing a query according to the globally unique AMF identifier of the first AMF to obtain a service address of the first AMF;
in response to detecting that the first AMF is abnormal, querying, according to the globally unique AMF identifier of the first AMF, a second AMF corresponding to the first AMF; and
feeding back a service address of the second AMF to the first network element.

11. A communication device, comprising a memory and at least one processor, wherein
the memory is configured to store at least one program; and
when the at least one program is executed by the at least one processor, the at least one processor is caused to implement the communication method according to any one of claims 1 to 6, 7 to 9, or 10.

12. A storage medium storing a computer program, wherein the communication method according to any one of claims 1 to 6, 7 to 9, or 10 is implemented when the computer program is executed by a processor.
